# EUROPÄISCHE PATENTSCHRIFT

(11) **EP 2 396 877 B1**
(45) Veröffentlichungstag und Bekanntmachung des Hinweises auf die Patenterteilung: **05.06.2013**
(21) Anmeldenummer: 10704303.6
(22) Anmeldetag: 18.01.2010
(51) Int. Cl.: H02M 1/00, G06F 9/445

(54) **PHOTOVOLTAIKANLAGE MIT MEHREREN WECHSELRICHTERN, WECHSELRICHTER, USB-MASSENSPEICHERGERÄT UND VERFAHREN ZUM DURCHFÜHREN VON SOFTWARE-UPDATES AN WECHSELRICHTERN**
PHOTOVOLTAIC PLANT HAVING A PLURALITY OF INVERTERS, INVERTER, USB MASS STORAGE DEVICE AND METHOD FOR CARRYING OUT SOFTWARE UPDATES ON INVERTERS
INSTALLATION PHOTOVOLTAÏQUE POURVUE DE PLUSIEURS ONDULEURS, ONDULEURS, DISPOSITIF MÉMOIRE DE MASSE USB ET PROCÉDÉ DE MISES À JOUR DE LOGICIELS D'ONDULEURS

(30) Priorität: 12.02.2009 AT 2422009
(43) Veröffentlichungstag der Anmeldung: 21.12.2011
(73) Patentinhaber: Fronius International GmbH, 4643 Pettenbach (AT)
(72) Erfinder: ANGERER, Christian, A-4020 Linz (AT); ZORN, Alexander, A-4563 Micheldorf (AT); KREUZER, Harald, Josef, A-4616 Weisskirchen (AT); DANMAYR, Joachim, A-4542 Nussbach (AT)
(74) Vertreter: Sonn & Partner Patentanwälte
(86) Internationale Anmeldenummer: PCT/AT2010/000013
(87) Internationale Veröffentlichungsnummer: WO 2010/091444

(56) Entgegenhaltungen:
- WO-A1-2005/117245
- WO-A1-2006/086809

## Beschreibung

Die Erfindung betrifft eine Photovoltaikanlage mit mehreren Wechselrichtern, die über ein Netzwerk miteinander verbunden sind, wobei die Wechselrichter eine Steuervorrichtung mit zumindest einem Mikroprozessor und zumindest einem Speicher, eine Schnittstelle für die Kommunikation mit den anderen Wechselrichtern, ein DC/AC-Modul zum Umwandeln einer aus einer externen Energiequelle gelieferten Gleichspannung in eine Wechselspannung, und eine Ein-/Ausgabeeinheit aufweisen.

Weiters betrifft die Erfindung einen Wechselrichter für eine oben genannte Photovoltaikanlage mit einer Steuervorrichtung mit zumindest einem Mikroprozessor und zumindest einem Speichen, einer Schnittstelle für die Kommunikation mit anderen Wechselrichtern, einem DC/AC-Modul zum Umwandeln einer aus einer externen Energiequelle gelieterten Gleichspannung in eine Wechselspannung.

Schließlich betrifft die Erfindung ein Verfahren zum Durchführen von Software-Updates an einem von mehreren über ein Netzwerk miteinander verbundenen Wechselrichtern einer oben genannten Photovoltaikanlage.

Die vorliegende Erfindung ist auf Wechselrichter, insbesondere netzgekoppelte Wechselrichter oder Inselwechselrichter, gerichtet, welche die Gleichspannung einer Energiequelle in eine Wechselspannung umwandeln. Bei Inselwechselrichtern wird aus dem Gleichstrom einer Batterie oder Solarzelle Wechselstrom erzeugt, so dass es auch fernab vom Versorgungsnetz möglich ist, normale elektrische Haushaltsgeräte zu betreiben. Bei netzgekoppelten Wechselrichtern wird die Energie von einer Gleichspannungsquelle ebenfalls in eine Wechselspannung umgewandelt, die jedoch in ein bestehendes Versorgungsnetz eingespeist wird.

Übliche Wechselrichter enthalten einen oder mehrere Mikroprozessoren bzw. Mikrokontroller, in welchen bestimmte Programme ablaufen, beispielsweise zur Ablaufsteuerung, Betriebssteuerung, Steuerung bei Fehlverhalten, Erfassung des Batteriezustands oder zur Menüführung.

Die WO 2006/086809 A1 beschreibt einen Wechselrichter der gegenständlichen Art, ohne dass eine Vereinfachung der Handhabung von Software-Updates beschrieben wird.

Die WO 2005/117245 A1 zeigt eine Photovoltaikanlage, welche eine elektronische Steuereinheit zur Diagnose eines Wechselrichtermoduls aufweist.

Aufgrund von Weiterentwicklungen der Geräte bzw. Änderungen der Betriebssituation werden die in den Mikroprozessoren bzw. Mikrokontrollern ablaufenden Programme bzw. die entsprechende Software häufig verändert. Ein Einspielen einer neuen Software, ein sogenanntes Software-Update, ist derzeit mit relativ hohem Aufwand verbunden. Dies wird dadurch weiter erschwert, dass im Steuergerät, dessen Software aktualisiert werden soll, keine Energieversorgung existiert. Somit ist es beispielsweise erforderlich, mit Hilfe eines tragbaren Computers, der mit einer Spannungsversorgung versehen ist, zum Ort, an welchem der Wechselrichter aufgestellt ist, zu fahren und dort die neue Software einzuspielen.

Eine andere Möglichkeit besteht darin, ein eigens für dieses Software-Update entwickeltes Gerät an eine extra dafür vorgesehene Schnittstelle des Wechselrichters anzuschließen, wodurch ein automatisches Software-Update gestartet wird.

Aus der AT 501 846 B1 ist beispielsweise eine Einrichtung und ein Verfahren zur Durchführung von Software-Updates in Wechselrichtern ohne permanente eigene elektrische Energieversorgung bekannt. Der Wechselrichter weist Schnittstellen für die Kommunikation mit darin enthaltenen Mikroprozessoren auf, sowie eine sogenannte Update-Einrichtung, welche ein besonders einfaches und rasches Update der Software, auch bei Wechselrichtern ohne Energiequelle, zulässt. Zu diesem Zweck ist zumindest ein Speicher vorgesehen, welcher die zu überspielende Software enthält, eine Spannungsquelle, zumindest eine Schnittstelle zur Verbindung mit der Kommunikationsschnittstelle des Wechselrichters, zumindest ein mit der Spannungsquelle verbundener Anschluss zur Verbindung mit einem Anschluss zur externen Energieversorgung der Mikroprozessoren des Wechselrichters, und weiters eine Einheit zur Steuerung der Übertragung der Software vom Speicher in den Mikroprozessor des Wechselrichters. Weiters kann ein Speicher der Update-Einrichtung mit einer Schnittstelle zum Lesen/Schreiben des Speicherinhalts vorgesehen sein. Über diese Schnittstelle kann eine neue Software in die Update-Einrichtung eingespielt werden. Vorzugsweise handelt es sich bei dieser Schnittstelle um eine standardisierte Schnittstelle, beispielsweise eine USB (Universal Serial Bus)-Schnittstelle oder dgl..

Nachteilig ist hierbei, dass die USB-Schnittstelle lediglich an der Update-Einrichtung zum Aufspielen der Software angeordnet ist, und für die Verbindung der Update-Einrichtung mit dem Wechselrichter eine weitere Schnittstelle benötigt wird, über die anschließend auch das Software-Update am Wechselrichter durchgeführt wird.

Weiters ist aus der US 6 357 021 B1 ein Verfahren und eine Einrichtung zur Aktualisierung der Software eines beliebigen Peripheriegerätes bekannt, welches während des Aktualisierungsvorgangs mit Strom versorgt wird. Die Verbindung mit einem Computer erfolgt insbesondere über eine USB-Schnittstelle.

Unter den Begriff "Software" fällt insbesondere eine sogenannte Firmware, das ist jene Software, die in einem Mikroprozessor oder Mikrokontroller eines entsprechenden elektronischen Geräts eingebettet ist und in einem Programmspeicher, wie z.B. einem Flash-Speicher bzw. EEPROM, gespeichert ist. Die Firmware wird meist vom Hersteller des elektronischen Geräts mitgeliefert und ist für den Benutzer des Geräts nicht sichtbar und enthält verschiedene Funktionen zur Steuerung des Geräts.

Die Aufgabe der vorliegenden Erfindung besteht daher in der Schaffung einer Photovoltaikanlage, eines Wechselrichters und eines Verfahrens zum Durchführen von Software-Updates an einem Wechselrichter, durch welche eine Vereinfachung der Handhabung ermöglicht wird. Nachteile bekannter Systeme sollen durch die vorliegende Erfindung vermieden bzw. reduziert werden.

Die Aufgabe der vorliegenden Erfindung wird durch eine oben genannte Photovoltaikanlage gelöst, wobei an zumindest einem Wechselrichter eine USB-Schnittstelle zum Anschluss eines USB-Massenspeichergeräts, insbesondere eines USB-Sticks, zum Durchführen automatischer Updates einer im Mikroprozessor ablaufenden Software und/oder Konfigurationsblock-Updates und/oder zum Aufzeichnen von Logging-Daten der Wechselrichter angeordnet ist, wobei der mit dem USB-Massenspeichergerät verbundene Wechselrichter zur automatischen Übernahme der Funktion eines Masters im Netzwerk ausgebildet ist, so dass die sich am USB-Massenspeichergerät befindlichen Daten auch an alle anderen Wechselrichter im Netzwerk verteilbar und deren Software und Konfigurationsblöcke auf dieselbe Weise aktualisierbar sind.

Weiters wird die Aufgabe der Erfindung durch einen Wechselrichter für eine oben genannten Photovoltaikanlage gelöst, bei dem eine USB-Schnittstelle zum Anschluss eines USB-Massenspeichergeräts, insbesondere eines USB-Sticks, zum Durchführen automatischer Updates einer im Mikroprozessor ablaufenden Software und/oder Konfigurationsblock-Updates und/oder zum Aufzeichnen von Logging-Daten des Wechselrichters vorgesehen ist, wobei mit mit dem Anschluss eines USB-Massenspeichergerät an der US-B-Schnittstelle der Wechselrichter zur automatischen Übernahme der Funktion eines Masters im Netzwerk ausgebildet ist, so dass die sich am USB-Massenspeichergerät befindlichen Daten auch an alle anderen Wechselrichter im Netzwerk verteilbar und deren Software und Konfigurationsblöcke auf die selbe Weise aktualisierbar sind.

Die Aufgabe der Erfindung wird auch durch ein Verfahren zum Durchführen von Software-Updates an einem von mehreren über ein Netzwerk miteinander verbundenen Wechselrichtern einer oben genannten Photovoltaikanlage gelöst, wobei zumindest ein Wechselrichter mit einer USB-Schnittstelle mit einem USB-Massenspeichergerät zum Durchführen automatischer Updates einer in einem Mikroprozessor des Wechselrichters ablaufenden Software und/oder Konfigurationsblock-Updates und/oder zum Aufzeichnen von Logging-Daten des Wechselrichters verbunden wird, wobei der mit dem USB-Massenspeichergerät verbundene Wechselrichter automatisch die Funktion eines Masters im Netzwerk übernimmt, und die sich am USB-Massenspeichergerät befindlichen Daten auch an alle anderen Wechselrichter im Netzwerk verteilt werden und deren Software und Konfigurationsblöcke auf die selbe Weise aktualisiert werden.

Vorteilhaft ist hierbei, dass standardisierte Komponenten eingesetzt und somit die Kosten wesentlich gesenkt werden können. Die Handhabung wird verbessert, da der Umgang mit bekannten Komponenten für die Benutzer einfach ist. Der Benutzer führt durch einfaches Anstecken des USB-Massenspeichergerätes automatisch das Software-Update des Betriebssystems für die Mikroprozessoren oder anderer Daten aus, ohne dass hierzu weitere Einstellungen bzw. Steuerabläufe vorgenommen werden müssen. Vorteilhafterweise erfolgt die Auswahl der neuesten Software für die aktuell vorliegende Hardware (Wechselrichter und darin enthaltene Mikroprozessoren) automatisch, so dass eine Auswahl durch den Benutzer entfallen kann und damit Fehler und eventuelle Schäden an der Hardware vermieden werden. Weiters kann die Kompatibilität der einzelnen Softwarekomponenten der einzelnen Mikroprozessoren zueinander überprüft werden.

Weiters kann die automatische Erkennung auch die Auswahl des für das jeweilige Land spezifischen Konfigurationsblocks und/oder Grenzwerte und Vorgaben des Energieversorgers ermöglichen, wodurch deren Einhaltung gewährleistet wird. Wichtige Einstellparameter der Wechselrichter können bei diesen Verfahren erhalten bleiben, um auch nach dem Update die geforderten gültigen Vorschriften und Normen und/oder technischen Richtlinien gewährleisten zu können, beispielsweise die Grenzwerte der Netzspannung. Ebenso können Parameter oder Informationen, welche primär nur für den Kunden von Interesse sind, beispielsweise die Betriebsstunden, erhalten bleiben.

Ein weiterer Vorteil besteht in der Möglichkeit der Verschlüsselung der Software und/oder Konfigurationsblocks, so dass eine Manipulation durch Unbefugte wesentlich erschwert wird.

Weitere Details sowie Maßnahmen für das Verfahren können aus der nachfolgenden Beschreibung entnommen werden.

Die vorliegende Erfindung wird anhand der beigefügten Zeichnungen näher erläutert. Darin zeigen:
Fig. 1 ein Blockschaltbild eines Wechselrichters mit Mikroprozessoren und einer USB-Schnittstelle; und
Fig. 2 ein Blockschaltbild einer Photovoltaikanlage mit mehreren Wechselrichtern, in vereinfachter schematischer Darstellung.

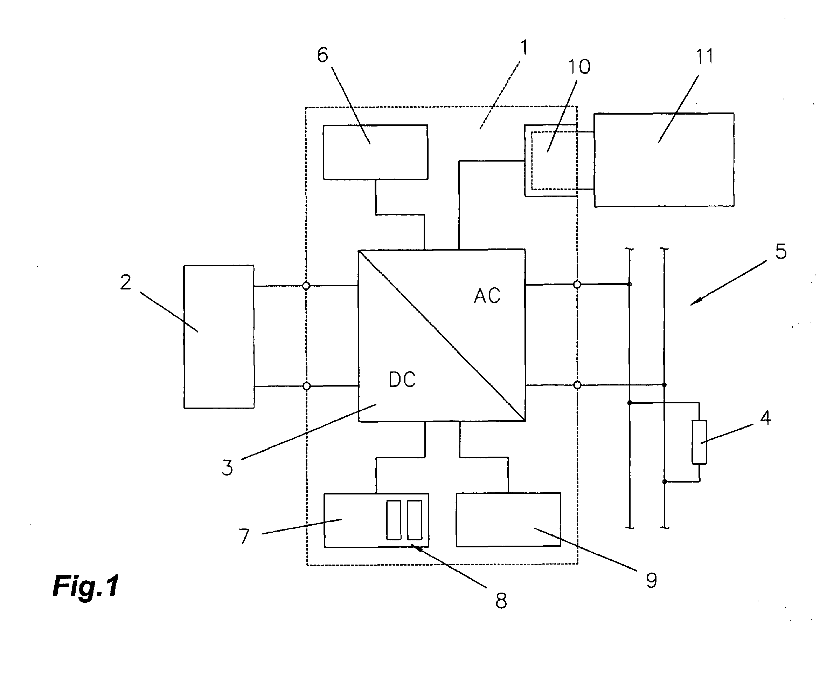

Fig. 1 zeigt ein Blockschaltbild eines Wechselrichters 1, der aus einer von einer Batterie oder einer anderen externen Energiequelle, wie z.B. einem Solarmodul 2, gelieferten Gleichspannung mit Hilfe eines DC/AC-Moduls 3 eine Wechselspannung von üblicherweise 230 V liefert. Diese Wechselspannung dient zur Versorgung verschiedener Lasten 4, wie bei Inselwechselrichtern üblich, oder zur Einkopplung in ein bestehendes Versorgungsnetz 5 bei netzgekoppelten Wechselrichtern 1.

Der Wechselrichter 1 beinhaltet ein Netzteil 6, das sämtliche Komponenten mit elektrischer Energie versorgt. Weiters ist eine Steuervorrichtung 7 vorgesehen, in der verschiedene Mikroprozessoren 8 enthalten sein können, in welchen Programme ablaufen, die beispielsweise zur Ablaufsteuerung, Betriebssteuerung der Fehlerüberwachung, der Überwachung des Batteriezustands und/oder der Solarmodule 2 und/oder der Menüführung dienen können. Schließlich kann eine Ein-/Ausgabeeinheit 9 vorgesehen sein, über die verschiedene Betriebszustände des Wechselrichters 1 angezeigt oder Parameter eingegeben werden können.

Um die in den Mikroprozessoren 8 des Wechselrichters 1 ablaufende Software zu ändern, weist der Wechselrichter 1 eine US-B-Schnittstelle 10 auf. Der Wechselrichter 1 kann noch weitere Schnittstellen, wie beispielsweise eine serielle RS 232-Schnittstelle, eine oder mehrere weitere USB-Schnittstellen oder dgl. aufweisen.

Über die genannte USB-Schnittstelle 10 kann ein USB-Massenspeichergerät 11, insbesondere ein sogenannter USB-Stick, mit dem Wechselrichter 1 verbunden werden, wie dies in Fig. 1 schematisch dargestellt ist. Erkennt der Wechselrichter 1 ein neues, mit der USB-Schnittstelle 10 verbundenes, USB-Massenspeichergerät 11, so beginnt dieser automatisch nach einer Update-Datei zu suchen. Wird eine gültige Update-Datei gefunden, beginnt der Wechselrichter 1 vorzugsweise selbstständig, die passende Software aus der Update-Datei auszuwählen und ein Update der Software im Mikroprozessor 8 des Wechselrichters 1 durchzuführen.

Selbstverständlich ist es möglich, dass nach dem Erkennen des Vorhandenseins eines USB-Massenspeichergerätes 11 der Wechselrichter 1 auf eine Entscheidung bzw. Bestätigung des Benutzers wartet, ob ein Update vorgenommen werden soll oder nicht. In diesem Fall kann beispielsweise am Display der Ein-/Ausgabeeinheit 9 des Wechselrichters 1 angezeigt werden, dass ein neues Software-Update vorhanden ist. Durch Betätigen eines Tasters an der Ein-/Ausgabeeinheit 9 kann der Benutzer das Software-Update starten.

Der Update-Vorgang kann sowohl die Software, als auch die Konfigurationsblöcke und/oder beides beinhalten, wobei diese Vorgänge voneinander unabhängig sind. Es kann demnach ein Konfigurationsblock-Update durchgeführt werden, ohne dass die Software verändert wird und umgekehrt. Nach einem erfolgreichen Update-Vorgang programmiert sich der Wechselrichter 1 selbstständig mit der neuen Software, indem beispielsweise automatisch ein Neustart des Wechselrichters 1 durchgeführt und beim Hochfahren des Wechselrichters 1 auf die neue Software bzw. auf die veränderten Dateien zugegriffen wird.

Nach dem Starten des Wechselrichters 1 liest dieser die vom USB-Massenspeichergerät 11 in einen nichtflüchtigen Speicher kopierten Konfigurationsblöcke aus. Am Wechselrichter 1 kann nun bei Bedarf eine dieser Konfigurationen ausgewählt werden. Somit ist die Konfigurationsblockauswahl dynamisch gestaltet und unabhängig von der vorhandenen Softwareversion am Gerät.

Durch Verwendung eines sogenannten Update-Gruppenindikators kann ein Update auch auf spezielle, gültigen Vorschriften, Normen und/oder technischen Richtlinien entsprechende Konfigurationen eingeschränkt werden.

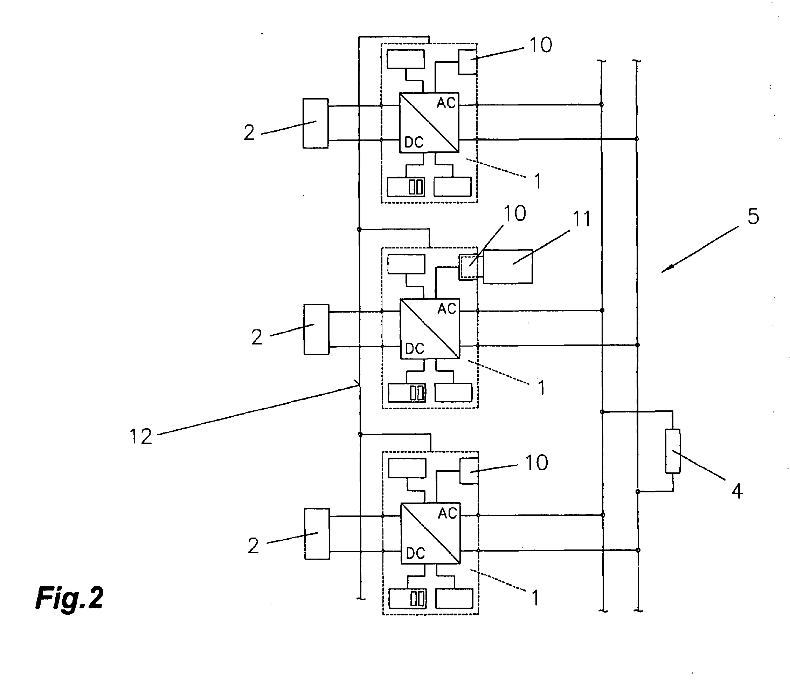

Bevorzugt werden heutzutage bei einer Photovoltaikanlage mehrere Wechselrichter 1 über ein Netzwerk 12 miteinander verbunden. Die parallel geschalteten Wechselrichter 1 speisen die umgewandelte Energie beispielsweise in das Versorgungsnetz 5 ein, wie dies schematisch in Fig. 2 dargestellt ist. Bevorzugt besitzen alle Wechselrichter 1 die gleiche Bauart und sind jeweils mit einer integrierten USB-Schnittstelle 10 ausgestattet. Werden mehrere Wechselrichter 1 miteinander vernetzt, so übernimmt jener Wechselrichter 1, welcher mit einem USB-Massenspeichergerät 11 verbunden ist, automatisch die Funktion eines Masters im Netzwerk 12. Der Benutzer kann somit den USB-Stick bzw. das USB-Massenspeichergerät 11 an einen beliebigen Wechselrichter 1 des Systems anstecken, welcher anschließend als Master fungiert. Dieser Wechselrichter 1 kann die sich am USB-Massenspeichergerät 11 befindlichen Daten auch an alle anderen Wechselrichter 1 im Netzwerk 12 verteilen und deren Software und Konfigurationsblöcke auf dieselbe Weise aktualisieren. Durch das Anstecken des USB-Massenspeichergerätes 11 an die USB-Schnittstelle 10 eines Wechselrichters 1 wird eine Änderung des Masters vorgenommen, so dass dem Wechselrichter 1 mit dem angesteckten USB-Stick sämtliche Möglichkeiten in der Kommunikation mit den anderen Wechselrichtern 1 zur Verfügung stehen, dieser Wechselrichter 1 also sämtlich Rechte erhält. Somit ist es auch möglich, dass dieser Wechselrichter 1 über das Netzwerk 12, mit dem alle Wechselrichter 1 miteinander verbunden sind, ein entsprechendes Software-Update vornimmt. Bevorzugt wird jedoch zuerst jener Wechselrichter 1 aktualisiert, an dem der USB-Stick angesteckt wird, worauf anschließend die anderen Wechselrichter 1 hintereinander oder gleichzeitig aktualisiert werden.

Weiters kann das an den Wechselrichter 1 angeschlossene USB-Massenspeichergerät 11 als Speicher für Logging-Daten dienen. Dabei werden die vom Wechselrichter 1 ermittelten Daten am USB-Massenspeichergerät 11 aufgezeichnet. Befindet sich der Wechselrichter 1 in einem Netzwerk 12 aus mehreren Wechselrichtern 1, so übernimmt jener Wechselrichter 1, der mit dem USB-Massenspeichergerät 11 verbunden ist, wiederum die Master-Funktion und kann die Messdaten der anderen Geräte bzw. Wechselrichter 1 anfordern und am USB-Massenspeichergerät 11 speichern.

Ist im Netzwerk 12 ein weiterer Master, beispielsweise ein fix definierter Master-Wechselrichter 1, integriert, so kann auch dieser Daten vom USB-Massenspeichergerät 11 anfordern. Der fix definierte Master-Wechselrichter 1 kann daher über das Netzwerk 12 und den Wechselrichter 1, an dem der USB-Stick angesteckt ist, auf das USB-Massenspeichergerät 12 zugreifen. Damit kann dieser fix definierte Master-Wechselrichter 1 beispielsweise die Daten des USB-Massenspeichergeräts 11 über das Netzwerk 12 auf einen Personalcomputer übertragen bzw. vom Personalcomputer Daten auf den USB-Stick an einem anderen Wechselrichter 1 zuordnen und abspeichern.

## Patentansprüche

1. Wechselrichter (1) für eine Photovoltaikanlage
,mit einer Steuervorrichtung (7) wind zumindest einem Mikroprozessor (8) und zumindest einem Speicher, einer Schnittstelle für die Kommunikation mit anderen Wechselrichtern, einem DC/AC-Modul (3) zum Umwandeln einer aus einer externen Energiequelle gelieferten Gleichspannung in eine Wechselspannung , **dadurch gekennzeichnet, dass** eine USB-Schnittstelle (10) zum Anschluss eines USB-Massenspeichergeräts (11), insbesondere eines USB-Sticks, zum Durchführen automatischer Updates einer im Mikroprozessor (8) ablaufenden Software und/oder Konfigurationsblock-Updates und/oder zum Aufzeichnen von Logging-Daten des Wechselrichters (1) vorgesehen ist, wobei mit dem Anschluss eines USB-Massenspeichergeräts (11) an der US-B-Schnittstelle (11) der Wechselrichter (1) zur automatischen Übernahme der Funktion eines Masters im Netzwerk (12) ausgebildet ist, sodass die sich am USB-Massenspeichergerät (11) befindlichen Daten auch an alle anderen Wechselrichter (1) im Netzwerk (12) verteilbar und deren Software und Konfigurationsblöcke auf dieselbe Weise aktualisierbar sind.

2. Photovoltaikanlage mit mehreren Wechselrichtern (1), die über ein Netzwerk (12) miteinander verbunden sind, wobei die Wechselrichter (1) eine Steuervorrichtung (7) mit zumindest einem Mikroprozessor (8) und zumindest einem Speicher, eine Schnittstelle für die Kommunikation mit den anderen Wechselrichtern (1), ein DC/AC-Modul (3) zum Umwandeln einer aus einer externen Energiequelle gelieferten Gleichspannung in eine Wechselspannung, und eine Ein-/Ausgabeeinheit (9) aufweisen,
wobei zumindest einer der mehreren Wechselrichter, ein wechselrichter nach Anspruch 1 ist.

3. Photovoltaikanlage nach Anspruch 2, **dadurch gekennzeichnet, dass** Mittel zur Verschlüsselung der zwischen dem USB-Massenspeichergerät (11) und dem Wechselrichter (1) übermittelten Daten vorgesehen sind.

4. Verfahren zum Durchführen von Software-Updates an einem von mehreren über ein Netzwerk (12) miteinander verbundenen Wechselrichtern (1) einer Photovoltaikanlage nach Anspruch 2 oder 3, **dadurch gekennzeichnet, dass** zumindest ein Wechselrichter (1) mit einer USB-Schnittstelle (10) mit einem USB-Massenspeichergerät (11) zum Durchführen automatischer Updates einer in einem Mikroprozessor (8) des Wechselrichters (1) ablaufenden Software und/oder Konfigurationsblock-Updates und/oder zum Aufzeichnen von Logging-Daten des Wechselrichters (1) verbunden wird, wobei der mit dem USB-Massenspeichergerät (11) verbundene Wechselrichter (1) automatisch die Funktion eines Masters im Netzwerk (12) übernimmt, und die sich am USB-Massenspeichergerät (11) befindlichen Daten auch an alle anderen Wechselrichter (1) im Netzwerk (12) verteilt werden und deren Software und Konfigurationsblöcke auf dieselbe Weise aktualisiert werden.

5. Verfahren nach Anspruch 4, **dadurch gekennzeichnet, dass** die zwischen dem USB-Massenspeichergerät (12) und dem Wechselrichter (1) übermittelten Daten zum Schutz vor Manipulation verschlüsselt werden.

6. Verfahren nach Anspruch 4 oder 5, **dadurch gekennzeichnet, dass** aus den im USB-Massenspeichergerät (11) gespeicherten Daten die für den jeweiligen Wechselrichter (1) geeigneten Daten automatisch ausgewählt werden.

## Claims

1. An inverter (1) for a photovoltaic plant, comprising a control apparatus (7) having at least one microprocessor (8) and at least one storage, an interface for communicating with the remaining inverters (1), a DC/AC module (3) for converting a direct current supplied from an external energy source into an alternating current, **characterized in that** a USB interface (10) is provided for connecting a USB mass storage device (11), in particular a USB stick, so as to carry out automatic updates in a software running in the microprocessor (8) and/or configuration block updates and/or so as to record logging data of the inverter (1), wherein with the connection of an USB mass storage device (11) to the USB interface the inverter (1) is designed for automatically assuming the function of a master in the network (12), so that the data available in the USB mass storage device (11) are adapted to be distributed also to all remaining inverters (1) in the network (12) and the software and configuration blocks thereof are adapted to be updated in the same manner.

2. A photovoltaic plant having a plurality of inverters (1) connected to each other by means of a network (12), wherein the inverters (1) comprise a control apparatus (7) having at least one microprocessor (8) and at least one storage, an interface for communicating with the remaining inverters (1), a DC/AC module (3) for converting a direct current supplied from an external energy source into an alternating current, and an input/output unit (9), wherein at least one of the plurality of inverters is an inverter according to claim 1.

3. The photovoltaic plant according to claim 2, **characterized in that** means are provided for encrypting the data transmitted between the USB mass storage device (11) and the inverter (1).

4. A method for performing software updates on one of a plurality of inverters (1) of a photovoltaic plant according to claims 2 or 3 which are connected to each other by means of a network (12), **characterized in that** at least one inverter (1) with a USB interface (10) is connected with a USB mass storage device (11) so as to carry out automatic updates in a software running in a microprocessor (8) of the inverter (1) and/or configuration block updates and/or so as to record logging data of the inverter (1), wherein the inverter (1) connected with the USB mass storage device (11) automatically assumes the function of a master in the network (12) and the data available in the USB mass storage device (11) are distributed also to all remaining inverters (1) in the network (12) and the software and configuration blocks thereof are updated in the same manner.

5. The method according to claim 4, **characterized in that** the data transmitted between the USB mass storage device (12) and the inverter (1) are encrypted so as to protect them from manipulation.

6. The method according to claims 4 or 5, **characterized in that** the data suitable for the respective inverter (1) are automatically selected from the data stored in the USB mass storage device (11).

## Revendications

1. Onduleur (1) pour une installation photovoltaïque, avec un dispositif de commande (7) et au moins un microprocesseur (8) et au moins une mémoire, une interface pour la communication avec d'autres onduleurs, un module DC/AC (3) pour la conversion d'une tension continue délivrée par une source d'énergie externe en une tension alternative, **caractérisé en ce qu'**une interface USB (10) est prévue pour le branchement d'un dispositif de stockage de masse USB (11), en particulier d'une clé USB, afin d'effectuer des mises à jour automatiques d'un logiciel fonctionnant dans le microprocesseur (8) et/ou des mises à jour de blocs de configuration et/ou afin d'enregistrer des données collectées par l'onduleur (1), dans lequel le branchement d'un dispositif de stockage de masse USB (11) à l'interface USB (11) permet de faire en sorte que l'onduleur (1) prenne automatiquement en charge la fonction d'un maître dans le réseau (12), de façon à ce que les données se trouvant sur le dispositif de stockage de masse USB (11) puissent également être réparties vers tous les autres onduleurs (1) du réseau (12) et à ce que leur logiciel et leurs blocs de configuration puissent être actualisés de la même manière.

2. Installation photovoltaïque avec plusieurs onduleurs (1), reliés entre eux via un réseau (12), dans laquelle les onduleurs (1) présentent un dispositif de commande (7) avec au moins un microprocesseur (8) et au moins une mémoire, une interface pour la communication avec les autres onduleurs (1), un module DC/AC (3) pour la conversion d'une tension continue délivrée par une source d'énergie externe en une tension alternative, et une unité d'entrée/sortie (9), dans laquelle au moins un des plusieurs onduleurs est un onduleur selon la revendication 1.

3. Installation photovoltaïque selon la revendication 2, **caractérisée en ce que** sont prévus des moyens de chiffrement des données transmises entre le dispositif de stockage de masse USB (11) et l'onduleur (1).

4. Procédé de réalisation de mises à jour logicielles sur un parmi plusieurs onduleurs (1) reliés entre eux via un réseau (12) d'une installation photovoltaïque selon la revendication 2 ou 3, **caractérisé en ce qu'**au moins un onduleur (1) est relié, à l'aide d'une interface USB (10), à un dispositif de stockage de masse USB (11) afin d'effectuer des mises à jour automatiques d'un logiciel fonctionnant dans un microprocesseur (8) de l'onduleur (1) et/ou des mises à jour de blocs de configuration et/ou afin d'enregistrer des données collectées par l'onduleur (1), dans lequel l'onduleur (1) relié au dispositif de stockage de masse USB (11) prend automatiquement en charge la fonction d'un maître dans le réseau (12), et les données se trouvant sur le dispositif de stockage de masse USB (11) peuvent également être réparties vers tous les autres onduleurs (1) du réseau (12) et leur logiciel et leurs blocs de configuration peuvent être actualisés de la même manière.

5. Procédé selon la revendication 4, **caractérisé en ce que** les données transmises entre le dispositif de stockage de masse USB (12) et l'onduleur (1) sont chiffrées afin de les protéger contre une manipulation.

6. Procédé selon la revendication 4 ou 5, **caractérisé en ce que** les données adaptées à l'onduleur (1) respectif sont automatiquement sélectionnées parmi les données stockées dans le dispositif de stockage de masse USB (11).
